# EUROPÄISCHE PATENTSCHRIFT

(11) **EP 0 720 394 B1**
(45) Veröffentlichungstag und Bekanntmachung des Hinweises auf die Patenterteilung: **11.04.2001**
(21) Anmeldenummer: 95119502.3
(22) Anmeldetag: 11.12.1995
(51) Int. Cl.: H04Q 1/14

(54) **Vermittlungssystem mit integriertem Hauptverteiler**
Switching system with distribution unit
Système de commutation avec unité de distribution

(30) Priorität: 27.12.1994 DE 9420759 U
(43) Veröffentlichungstag der Anmeldung: 03.07.1996
(73) Patentinhaber: SIEMENS AKTIENGESELLSCHAFT, 80333 München (DE)
(72) Erfinder: Zell, Karl, Dipl.Ing., D-82343 Niederpöcking (DE)

(56) Entgegenhaltungen:
- DE-A- 3 727 833
- US-A- 4 288 838

## Beschreibung

Die vorliegende Erfindung betrifft ein Kommunikationssystem, bestehend aus einem Vermittlungssystem und einem mit diesem über interne Anschlußleitungen verbundenen Hauptverteiler für den Anschluß der Teilnehmernetzleitungen.

Bisher werden Kommunikationssysteme getrennt aus einem Vermittlungssystem und einem Hauptverteiler aufgebaut. Hierbei sind jeweils separate, räumlich getrennte Gehäusekonstruktionen als Stand- und/oder Wandversionen ausgeführt. Die elektrische Verbindung untereinander erfolgt durch eine Vielzahl von geschirmten und kostenaufwendigen HVT-Steckkabeln, die in speziellen Kabelkanälen verlegt werden müssen. Der Platzbedarf und der Montageaufwand auf dem Boden bzw. an der Wand ist erheblich, ebenso die damit gekoppelte spezifische Längenfestlegung der Steckkabel (Fertigungs-, Montage-/Service-Logistik, Aufwendungen, Verpackungen usw.)

Derzeit werden Vermittlungssysteme in Gehäuse- bzw. Schrankkonstruktionen untergebracht. Dabei sind die einzelnen Vermittlungsbaugruppen als offene Baugruppenleiterplatten in einer aufwendigen Baugruppenrahmenkonstruktion geführt und mittels einer Rückwandverdrahtungsplatte miteinander verbunden. Auf der Rückseite der Rückwandverdrahtungsplatte, bzw. auf der Vorderseite der Baugruppen werden die Teilnehmerleitungen über Kabelstecker und Kabel zu einem extern angeordneten Hauptverteiler (HVT) in einer separaten Gehäusekonstruktion geführt. Aus elektrischen Gründen (EMV) kommen meist geschirmte Steckkabel zum Einsatz, deren Schirm beim Austritt bzw. Eintritt in das zu schirmende Gehäuse manuell freigelegt und dann elektrisch leitend mit diesem Gehäuse verbunden werden muß. Auf der internen Seite des Hauptverteilers werden Teilnehmerleitungen auf die Anschlußklemmen von Verteilerleisten aufgelegt und elektrisch kontaktiert. Im Kabelstecker und an den Verteilerleisten muß der Kabelmantel abisoliert werden, die Adernbündel freigelegt und die Einzeladern abisoliert und angeschlossen werden. Diese Fertigungsund Montageprozesse sind besonders kostenintensiv.

Die Aufgabe der vorliegenden Erfindung besteht daher darin, ein Kommunikationssystem der eingangs genannten Art anzugeben, welches sich einfacher und kostengünstiger herstellen läßt, und welches leichter zu montieren ist.

Diese Aufgabe wird für ein Kommunikationssystem der eingangs genannten Art dadurch gelöst, daß eine selbsttragende Rückwandverdrahtungsplatte in einer Gehäusekonstruktion vorgesehen ist, an deren oberem Ende über eine Scharniereinrichtung die einzelnen Systembaugruppen des Vermittlungssystems einhakbar und mittels eines Einschwenkvorgangs nach unten steckbar sind, daß unterhalb der Systembaugruppen auf der gleichen Rückwandleiterplatte die Anschlußleisten (Trennleisten) der Hauptverteiler-Internseite mit ihren vermittlungsseitigen Anschlüssen in die Rückwandverdrahtungsplatte eingepreßt sind, und daß unterhalb der Hauptverteiler-Internseite die Anschlußleisten (Rangierleisten) der Hauptverteiler-Externseite in die Gehäusekonstruktion der Rückwandverdrahtungsplatte eingerastet sind, wobei die Internseite des Hauptverteilers von der Externseite des Hauptverteilers durch einen an der Gehäusekonstruktion der Rückwandverdrahtungsplatte befestigten Träger für Sondereinbauten getrennt ist und die Rangierung zwischen der Intern- und Externseite des Hauptverteilers über Rangierdrähte in entsprechenden Drahtführungen und Rangierbereichen, die durch fädelfreie Kanäle und Rangierhaken gebildet sind, erfolgt.

Bei dem erfindungsgemäßen Kommunikationssystem bildet das Vermittlungssystem mit dem Hauptverteiler eine Einheit, bzw. es ist aus konstruktiver Sicht Bestandteil der Internseite des Verteilers. Damit lassen sich bei dem Kommunikationssystem gemäß der vorgegebenen Erfindung die internen Steckkabel zwischen dem Vermittlungssystem und der Hauptverteiler-Internseite eliminieren. Der Aufbau des eigentlichen Vermittlungssystems wird vereinfacht, da der bisher übliche aufwendige Baugruppenrahmen durch einen einfach aufgebauten Baugruppenhalter, welcher von der selbsttragenden Rückwandverdrahtungsplatte gebildet wird, ersetzt wird.

Gemäß einer Ausgestaltung der Erfindung ist die Rückwandverdrahtungplatte mit ihrer Gehäusekonstruktion flächig ausgebildet und derart versteift und mechanisch geschützt, daß lediglich die Steckmöglichkeiten frei zugänglich sind, wobei die Scharnierfunktion integriert ist. Auf diese Weise ergibt sich ein besonders einfacher, stabiler und geschützter Aufbau der Rückwandverdrahtungsplatte.

Andere Ausgestaltungen des erfindungsgemäßen Kommunikationssystems sind dadurch gekennzeichnet, daß die einzelnen Baugruppen des Vermittlungssystems durch eine perforierte bzw. unperforierte Kunststoffverkleidung oder Blechverkleidung gekapselt sind. Damit können die Baugruppen vor Berührung und Erwärmung geschützt werden. Außerdem können die geforderten EMV-Bedingungen erfüllt werden. Auf diese Weise können daher die einzelnen Baugruppen des eigentlichen Vermittlungssystems gut geschützt selbstständig vermarktet werden und vom Kunden selbst in die entsprechenden vorgesehenen Steckplätze eingesetzt werden.

Um nachträgliche Veränderungen und Anpassungen leicht durchführen zu können, ist die Rückwandwandverdrahtungsplatte mit ihrer Gehäusekonstruktion mehrstückig ausgebildet, wobei die einzelnen Teile dem Vermittlungssystem und/oder einer der beiden Hauptverteilerseiten zugeordnet sind. Dadurch wird eine modulare Trennnung im Backplanebereich von System und Hauptverteiler, bzw. Hauptverteilerseiten erreicht.

Nachfolgend wird anhand einer Figur ein Ausführungsbeispiel eines Kommunikationssystems gemäß der vorliegenden Erfindung beschrieben.

Es zeigen:

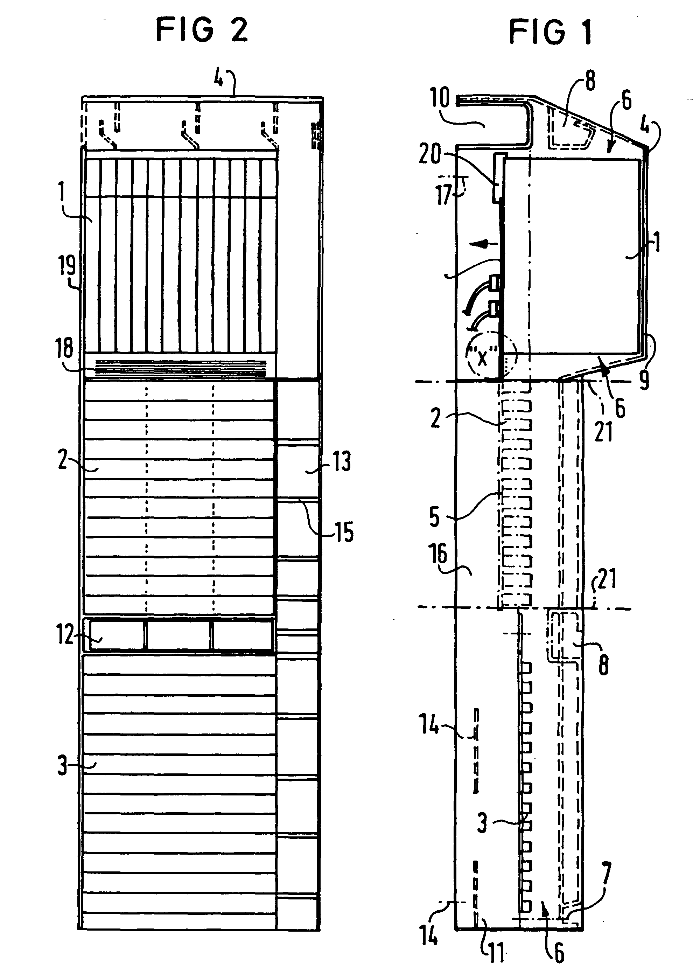

- Figur 1: einen Längsschnitt durch ein Ausführungsbeispiel eines Kommunikationssystems gemäß der vorliegenden Erfindung,
- Figur 2: eine Draufsicht auf die einzelnen Baugruppen und Bauteile des in Figur 1 dargestellten Kommunikationssystems,

Das erfindungsgemäße Kommunikationssystem besteht im wesentlichen aus drei Einheiten, nämlich dem eigentlichen Vermittlungssystem 1, der Hauptverteiler-Internseite 2 und der Hauptverteiler-Externseite 3, welche räumlich untereinander angeordnet sind. Bei der Kommunikationsanlage gemäß der vorliegenden Erfindung ist das Vermittlunssystem 1 und die HVT-Internseite 2 über eine Rückwandverdrahtungsplatte 5 miteinander verbunden, wobei die Rückwandverdrahtungsplatte in einer Gehäusekonstruktion eingebettet ist. Dabei ist die Gehäusekonstruktion derart ausgeführt, daß sie sich über das gesamte Kommunikationssystem erstreckt.

Die Rückwandverdrahtungsplatte 5 mit ihrer Gehäusekonstruktion dient zur Verdrahtung der Baugruppen des Vermittlungssystems untereinander so wie zur Verbindung des Vermittlungssystems mit den vermittlungsseitigen Anschlüssen der HVT-Internseite 2. Die Rückwandverdrahtungplatte 5 ist flächig ausgebildet und derart versteift und mechanisch geschützt, daß lediglich die Steckmöglichkeiten frei zugänglich sind, wobei die Scharnierfunktion zum Einhaken und Einschwenken der einzelnen Vermittlungsbaugruppen in der Rückwandverdrahtungplatte integriert ist.

Die Rückwandverdrahtungsplatte 5 mit ihrer Verlängerung kann einstückig ausgebildet sein. Es ist aber auch möglich das verlängerte Teil der Rückwandverdrahtungsplatte an die eigentliche Systemrückwandverdrahtungsplatte separat anzusetzen. Dies kann direkt mittels Einpreßmessern in Multiboard-Technik geschehen oder mittels eines Direktsteckers oder es kann über eine Steckverbindung erfolgen. Die Verbindung der eigentlichen Systemrückwandverdrahtungsplatte mit der Verlängerung kann über Stecker unterschiedlicher Art, d.h. über Stecker von verschiedenen Herstellern erfolgen.

Es kann auch eine Teilmöglichkeit der Rückwandverdrahtungsplatte 5 und ihrer Gehäusekonstruktion zwischen der Internund der Externseite des Hauptverteilers vorgesehen werden. Dadurch ergeben sich zwei modulare Trennstellen 21.

Bei dem erfindungsgemäßen Kommunikationssystem ist also das Vermittlungssystem in die Hauptverteiler-Internseite integriert, bzw. es ist aus konstruktiver Sicht Bestandteil der Hauptverteiler-Internseite. Dadurch lassen sich die internen Steckkabel zwischen dem Vermittlungsystem und dem Hauptverteiler eliminieren.

Unterhalb der HVT-Internseite 2 ist, getrennt durch einen Träger 12 für Sondereinbauten, die HVT-Externseite 3 angeordnet. Unterhalb der HVT-Externseite 3 erfolgt der Kabeleintritt 11 des Leitungsnetzes, wobei die einzelnen Kabel auf die Stege 14 für das Leitungsnetz geführt sind. An den Stegen 14 erfolgt auch die Schirmkontaktierung. Die Rangierung zwischen der HVT-Internseite 2 und der HVT-Externseite 3 erfolgt mittels Rangierkabel, welche durch den rechten Rangierkanal 13 und durch fädelfreie Rangierhaken 15 geführt sind.

Das eigentliche Vermittlungssystem ist durch eine Verkleidung 4 mit einer eventuell erforderlichen Schirmfunktion gekapselt. Zur Abführung der elektrischen Verlustleistung sind Entlüftungsschlitze 6 und , falls notwendig, ein Feinschutz 18 vorgesehen.

Die einzelnen Vermittlungsbaugruppen 19 des Vermittlungssystems 1 sind durch eine perforierte bzw. unperforierte Kunststoffverkleidung oder Blechverkleidung gekapselt. Damit können die Baugruppen 19 vor Berührung und Erwärmung geschützt werden. Außerdem können die geforderten EMV-Bedingungen erfüllt werden. Da die einzelnen Baugruppen lediglich im oberen Endbereich der Rückwandverdrahtungsplatte 5 eingehakt und dann nach unten geschwenkt werden, um gesteckt zu werden, können daher auf diese Weise die einzelnen Baugruppen 19 des eigentlichen Vermittlungssystems 1 gut geschützt selbständig vermarktet werden und vom Kunden selbst in die entsprechenden vorgesehenen Steckplätze eingesetzt werden.

Das ganze Kommunikationssystem ist an einem Rahmen 16 befestigt, welcher wiederum mit Wandbefestigungen 17 an einer Wand befestigt ist.

Durchlaufende Griffschalen 8 sind zur Optimierung der Montage- und Servicebedingungen vorgesehen. Zusätzlich kann das ganze Kommunikationssystem durch ein Schloß 7 gegen unbefugte Eingriffe geschützt werden.

## Patentansprüche

1. Kommunikationssystem, bestehend aus einem Vermittlungssystem und einem mit diesem über interne Anschlußleitungen verbundenen Hauptverteiler für den Anschluß der Teilnehmernetzleitungen,
**dadurch gekennzeichnet,**
daß eine selbsttragende Rückwandverdrahtungsplatte (5) in einer Gehäusekonstruktion vorgesehen ist, an deren oberem Ende über eine Scharniereinrichtung (20) die einzelnen Systembaugruppen (19) des Vermittlungssystems (1) einhakbar und mittels eines Einschwenkvorgangs nach unten steckbar sind, daß unterhalb der Systembaugruppen (19) auf derselben Rückwandverdrahtungsplatte (5) die Anschlußleisten der Hauptverteiler-Internseite (2) mit ihren vermittlungsseitigen Anschlüssen in die Rückwandverdrahtungsplatte (5) eingepreßt sind, und daß unterhalb der Hauptverteiler-Internseite (2) die Anschlußleisten der Hauptverteiler-Externseite (3) in die Gehäusekonstruktion der Rückwandverdrahtungsplatte (5) eingerastet sind, wobei die Internseite (2) des Hauptverteilers von der Externseite (3) des Hauptverteilers durch einen an der Gehäusekonstruktion der Rückwandverdrahtungsplatte (5) befestigten Träger (12) für Sondereinbauten getrennt ist und die Rangierung zwischen der Intern- und Externseite (2, 3) des Hauptverteilers über Rangierdrähte in entsprechenden Drahtführungen und Rangierbereichen (13), die durch fädelfreie Kanäle und Rangierhaken gebildet sind, erfolgt.

2. Kommunikationssystem nach Anspruch 1,
**dadurch gekennzeichnet,**
daß die Rückwandverdrahtungsplatte (5) mit ihrer Gehäusekonstruktion flächig ausgebildet und derart versteift und mechanisch geschützt ist, daß lediglich die Steckmöglichkeiten frei zugänglich sind, wobei die Scharnierfunktion integriert ist.

3. Kommunikationssystem nach Anspruch 1 oder 2,
**dadurch gekennzeichnet,**
daß die einzelnen Baugruppen des Vermittlungssystems (1) durch eine perforierte bzw. unperforierte Kunststoffverkleidung gekapselt sind.

4. Kommunikationssystem nach Anspruch 1 oder 2,
**dadurch gekennzeichnet,**
daß die einzelnen Baugruppen des Vermittlungssystems (1) durch eine perforierte bzw. unperforierte Blechverkleidung gekapselt sind.

5. Kommunikationssystem nach einem der vorhergehenden Ansprüche,
**dadurch gekennzeichnet,**
daß die Rückwandwandverdrahtungsplatte (5) mit ihrer Gehäusekonstruktion mehrstückig ausgebildet ist, wobei die einzelnen Teile dem Vermittlungssystem (1) und/oder einer der oder beiden Hauptverteilerseiten (2, 3) zugeordnet sind.

## Claims

1. Communications system, comprising a switching system and a main distribution board, which is connected to this switching system via internal connecting lines, for connection of subscriber network lines,
characterized
in that a self-supporting backplane motherboard (5) with a housing structure is provided, at whose upper end, via a hinge device (20), the individual system assemblies (19) of the switching system (1) can be hooked in and can be plugged in downwards by means of a pivoting-in process, in that, on the same backplane motherboard (5) underneath the system assemblies (19), the connecting strips of the main distribution board internal side (2) are pressed by means of their connections on the switching side into the backplane motherboard (5), and in that, underneath the main distribution board internal side (2), the connecting strips of the main distribution board external side (3) are latched into the housing structure of the backplane motherboard (5), with the internal side (2) of the main distribution board being separated from the external side (3) of the main distribution board by a support (12) for special fittings which is attached to the housing structure of the backplane motherboard (5), and the jump ring between the internal side (2) and the external side (3) of the main distribution board being provided via jump ring wires in appropriate wire guides and jump ring areas (13) which are formed by channels and jump ring hooks which require no threading.

2. Communications system according to Claim 1,
characterized
in that the backplane motherboard (5) is designed, with its housing structure, to be flat, and is reinforced and mechanically protected in such a way that only the plug-in capabilities are freely accessible, with the hinge function being integrated.

3. Communications system according to Claim 1 or 2,
characterized
in that the individual assemblies of the switching system (1) are encapsulated by a perforated or unperforated plastic lining.

4. Communications system according to Claim 1 or 2,
characterized
in that the individual assemblies of the switching system (1) are encapsulated by a perforated or unperforated sheet-metal lining.

5. Communications system according to one of the preceding claims,
characterized
in that the backplane motherboard (5) is designed, with its housing structure, in a number of pieces, with the individual parts being associated with the switching system (1) and/or with one or both of the main distribution board sides (2, 3).

## Revendications

1. Système de communication, constitué d'un système de commutation et d'un répartiteur principal, relié à ce dernier par l'intermédiaire de lignes de raccordement internes, pour le raccordement de lignes de réseau d'abonnés, caractérisé en ce qu'une plaque (5) de câblage de panneau arrière autoportante est prévue dans une construction en boîtier à l'extrémité supérieure de laquelle les modules (19) de système individuels du système (1) de commutation peuvent être accrochés par l'intermédiaire d'un dispositif (20) à charnière et enfichés vers le bas au moyen d'une opération de basculement, en ce que, au-dessous des modules (19) de système sur la même plaque (5) de câblage de panneau arrière, les réglettes de raccordement de la face (2) interne du répartiteur principal sont enfoncées par leur raccordement côté commutation dans la plaque (5) de câblage de panneau arrière, et en ce que, au-dessous de la face (2) interne de répartiteur principal, les réglettes de raccordement de la face (3) externe du répartiteur principal sont encliquetées dans la construction en boîtier de la plaque (5) de câblage de panneau arrière, la face (2) interne du répartiteur principal étant séparée de la face (3) externe du répartiteur principal par un support (12) pour des inserts particuliers fixé à la construction en boîtier de la plaque (5) de câblage de panneau arrière et la connexion entre la face (2) interne et la face (3) externe du répartiteur principal s'effectuant par l'intermédiaire de fils métalliques de connexion dans des dispositifs de guidage de fils et des zones (13) de connexion correspondantes qui sont formées par des canaux et des crochets de connexion exempts de fils.

2. Système de communication suivant la revendication 1,
caractérisé en ce que la plaque (5) de câblage de panneau arrière avec sa construction en boîtier est réalisée à plat et rigidifiée et protégée mécaniquement de telle manière que seules les possibilités d'enfichage sont librement accessibles, la fonction de charnière étant intégrée.

3. Système de communication suivant la revendication 1 ou 2, caractérisé en ce que les modules individuels du système (1) de commutation sont encapsulés dans un habillage en matière plastique perforé ou non perforé.

4. Système de communication suivant la revendication 1 ou 2, caractérisé en ce que les modules individuels du système (1) de commutation sont encapsulés dans un habillage en tôle perforé ou non perforé.

5. Système de communication suivant l'une des revendications précédentes, caractérisé en ce que la plaque (5) de câblage de panneau arrière avec sa construction en boîtier est réalisée en plusieurs pièces, les pièces individuelles étant associées au système (1) de commutation et/ou à l'une des deux ou aux deux faces (2, 3) du répartiteur principal.
